# EUROPEAN PATENT SPECIFICATION

(11) **EP 2 337 233 B1**
(45) Date of publication and mention of the grant of the patent: **07.12.2016**
(21) Application number: 09815632.6
(22) Date of filing: 28.09.2009
(51) Int. Cl.: H04B 7/005, H04L 27/34, H04W 52/34, H04W 52/32, H04W 52/42

(54) **MULTI-CARRIER CONTROL METHOD, MULTI-CARRIER PEAK CLIPPING MODULE AND BASE STATION**
MEHRTRÄGER-STEUERVERFAHREN, MEHRTRÄGER-SPITZENABSCHNEIDEMODUL UND BASISSTATION
PROCÉDÉ DE COMMANDE D'ONDES MULTI-PORTEUSES, MODULE ET STATION DE BASE D' ÉCRÊTAGE D'ONDES MULTI-PORTEUSES

(30) Priority: 28.09.2008 CN 200810216615
(43) Date of publication of application: 22.06.2011
(73) Proprietor: Huawei Technologies Co., Ltd., Longgang District Shenzhen, Guangdong 518129 (CN)
(72) Inventor: YAO, Guoqiang, Shenzhen (CN)
(74) Representative: Isarpatent
(86) International application number: PCT/CN2009/074277
(87) International publication number: WO 2010/034263

(56) References cited:
- EP-A1- 1 365 520
- CN-A- 1 400 759
- CN-A- 1 505 352
- CN-A- 101 378 275
- US-A1- 2007 010 269

## Description

### FIELD OF THE INVENTION

The present invention relates to the field of multi-carrier control, and in particular, to a multi-carrier control method, a multi-carrier peak clipping module, and a base station.

### BACKGROUD OF THE INVENTION

Currently, the Global System for Mobile Communications (GSM) multi-carrier power sharing technology is finding more and more applications. The GSM multi-carrier power sharing technology refers to that: in a GSM network, not all time slots require continuous, full power transmission; for a GSM multi-carrier base station, under the premise of unchanged rated output power of a multi-carrier high power amplifier, the output power of the high power amplifier can be regulated among multiple carriers, thereby achieving carrier power over-configuration. The carrier power over-configuration refers to that the sum of maximum output powers of carriers configured in each multi-carrier channel of the multi-carrier high power amplifier is greater than the rated output power of the multi-carrier high power amplifier. The carrier power over-configuration technology can increase the output power of each carrier in the multi-carrier channel in occupied time slots. Meanwhile, the output power of each carrier in each multi-carrier channel can be dynamically adjusted according to the actual distance from the network user terminal to the base station, coupling loss, or power strength of downlink signals of the base station received by the user terminal, and through a downlink power control algorithm and scheduling of a base station controller. Therefore, under the premise of unchanged rated output power of the multi-carrier high power amplifier, the power transmission capacity of a single carrier can be increased, thereby equivalently increasing the coverage radius of the network and reducing the construction cost of the network.

The prior art has the following disadvantages. After the base station adopts the multi-carrier power sharing technology, if a large number of user terminals are distributed at the cell edge, the base station controller may demand each carrier of the base station to work at the configured maximum transmission power. In this case, the total power required by the multi-carrier high power amplifier to output is greater than the rated output power. If the case is not controlled, the output power of the multi-carrier high power amplifier may be excessively large, heat consumption of the multi-carrier high power amplifier may increase dramatically, and accordingly the temperature of the high power amplifier module may increase constantly. Therefore, the indexes, such as radio-frequency switching spectrum, modulation spectrum and modulation precision, may be deteriorated. In a serious situation, the multi-carrier high power amplifier may even burn out. Meanwhile, the excessively large output power of the multi-carrier high power amplifier may cause increased power requirements for a power supply of the base station, and further cause increased heat consumption of the power supply, which leads to decreased output capacity of the power supply, and overloading of the power supply, thereby affecting the steady and reliable operation of the base station device.

US2007/0010269 A1 discloses a base station of performing transmission power control quickly with maintaining communication quality in mobile communications systems, by setting up priority about transmission power control and performing transmission power control sequentially from a channel with a high priority. A channel priority setting unit outputs priority information indicating priority for transmission power control about a plurality of channel information. A power calculation unit outputs total power information of all channels about the plurality of channel information. A power adjustment unit performs power adjustment to the channel information selected on the basis of the priority information when the total power information has larger value than maximum transmission power information.

EP 1 365 520 A1 discloses a base station with a transmission power manager, a channel determiner, and a transmission power calculator. The transmission power manager determines whether a total transmission power in a time slot N exceeds a maximum transmission power. When the transmission power manager determines that the total transmission power in the time slot N exceeds the maximum transmission power, the channel determiner determines whether there is a channel in which a transmission power can be decreased in the time slot N. When the channel determiner determines that there is such a channel, the transmission power calculator calculates a transmission power to be decreased in the time slot N in the channel.

### SUMMARY OF THE INVENTION

The present invention is directed to a multi-carrier control method, a multi-carrier peak clipping module and a base station.

In one aspect, the present invention provides a multi-carrier peak clipping module, where the
multi-carrier peak clipping module includes:
a power calculation unit, adapted to obtain a power of each carrier configured in a multi-carrier channel in a next time slot according to input power control information of said each carrier;
a multi-carrier power accumulation unit, adapted to obtain a total output power of the multi-carrier channel in the next time slot according to the power of each carrier in the next time slot obtained by the power calculation unit;
a multi-carrier peak clipping determination unit, adapted to subtract a rated total output power of the multi-carrier channel from the total power obtained by the multi-carrier power accumulation unit to obtain a peak clipping amplitude of the multi-carrier channel in the next time slot;
a peak clipping calculation unit, adapted to decrease powers of only non-main broadcast control channel (BCCH) carriers of the multi-carrier channel according to the peak clipping amplitude obtained by the multi-carrier peak clipping determination unit, and obtain an output power of said each carrier in the next time slot after peak clipping; and
a power conversion unit, adapted to obtain adjusted power control information of each carrier in the next time slot according to the output power of each carrier in the next time slot after peak clipping obtained by the peak clipping calculation unit;
where, if the total output power is greater than the rated total output power, the peak clipping amplitude equals a difference between the total output power and the rated total output power; and if the total output power is less than or equal to the rated total output power, the peak clipping amplitude equals zero.

In another aspect, the present invention provides a base station, where the base station includes: a multi-carrier peak clipping module as described above.

In another aspect, the present invention provides a multi-carrier control method, where the multi-carrier control method includes:
obtaining a power of each carrier configured in a multi-carrier channel in a next time slot according to input power control information of each carrier;
obtaining a total output power of the multi-carrier channel in the next time slot according to the power of each carrier in the next time slot;
subtracting a rated total output power of the multi-carrier channel from the total power to obtain a peak clipping amplitude of the multi-carrier channel in the next time slot;
decreasing powers of only non-main BCCH carriers of the multi-carrier channel according to the peak clipping amplitude to obtain an output power of each carrier in the next time slot after peak clipping; and
obtaining adjusted power control information of each carrier in the next time slot according to the output power of each carrier in the next time slot after peak clipping;
where if the total output power is greater than the rated total output power, the peak clipping amplitude equals a difference between the total output power and the rated total output power; and if the total output power is less than or equal to the rated total output power, the peak clipping amplitude equals zero.

Compared with the prior art, in the multi-carrier control method, the multi-carrier peak clipping module and the base station according to the present invention, the output power of the whole multi-carrier high power amplifier is decreased by performing peak clipping on non-main BCCH carriers in a multi-carrier channel, so as to effectively prevent an excessively large output power of the multi-carrier high power amplifier, satisfy requirements for the design specification of the multi-carrier high power amplifier, and prevent burnout of the multi-carrier high power amplifier and overloading of power supply systems of main devices, thereby achieving long-term and reliable operation of the multi-carrier base station device. Moreover, by achieving the GSM multi-carrier peak clipping by combining the multi-carrier peak clipping technology with power control in the GSM carrier frequency and time slot level, the GSM multi-carrier high power amplifier can be protected in time and effectively.

### BRIEF DESCRIPTION OF THE DRAWINGS

FIG. 1 is a schematic view of multi-carrier downlink applying a multi-carrier automatic link control technology in the prior art;
FIG. 2 is a schematic view of multi-carrier downlink applying a GSM multi-carrier uniform peak clipping technology in the prior art;
FIG. 3 is a schematic view of multi-carrier downlink applying a multi-carrier control method according to an embodiment of the present invention;
FIG. 4 is a schematic structural view of a multi-carrier peak clipping module according to an embodiment of the present invention; and
FIG. 5 is a schematic structural view of a multi-carrier peak clipping module according to another embodiment of the present invention.

### DETAILED DESCRIPTION OF THE EMBODIMENTS

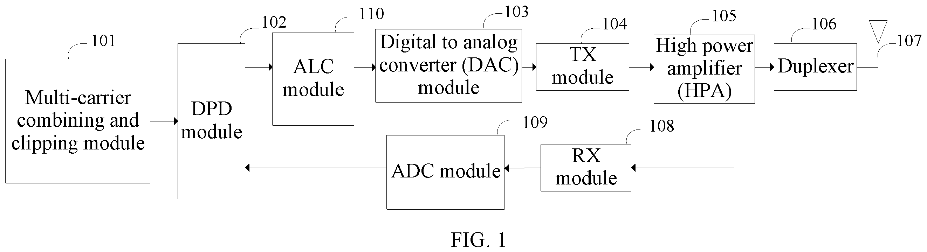

FIG. 1 is a schematic view of multi-carrier downlink applying a multi-carrier automatic link control technology in the prior art. In FIG. 1, 101 is a multi-carrier combining and clipping module, 102 is a digital pre-distortion (DPD) module, 103 is a digital to analog converter (DAC) module, 104 is a transmission (TX) module, 105 is a high power amplifier (HPA), 106 is a duplexer, 107 is an antenna, 108 is a receiving (RX) module for feedback, 109 is an analog to digital converter (ADC) module for feedback, and 110 is an automatic link control (ALC) module. The existing multi-carrier ALC technology protects the HPA by controlling signals before the signals being input into the DAC module 103 in the downlink direction.

Unless particularly specified, in this application, the downlink direction refers to the direction of a signal from a base station to a terminal, and the uplink direction refers to the direction of a signal from the terminal to the base station.

If it is detected that an average power of the signals input into the DAC module 103 in the downlink direction exceeds a preset protection threshold, the ALC module 110 can restrict the average power of the downlink signals within the protection threshold to ensure that the digital domain power does not exceed the designed range of the base station. In the following description, downlink IQ signals, that is, orthogonal downlink I signals and downlink Q signals, are taken as an example of the downlink signals.

The working principle of the ALC module 110 is as follows. Under the control of accumulation control signals, the ALC module 110 calculates an average power of multiple IQ signals by accumulating and averaging squares of the amplitude of the multiple downlink IQ signals, compares the average power with the preset protection threshold, and adjusts an input amplitude of the IQ signals input into the DAC module 103 according to a comparison result. If the average power is greater than the protection threshold, peak clipping is performed on the input IQ signals, that is, the input IQ signals are multiplied by a factor and then output to the DAC module 103, in which the factor may be a ratio of the preset protection threshold to the square root of the calculated average power. If the average power is less than the protection threshold, the input amplitude of the IQ signals input into the DAC module 103 remains unchanged.

The ALC technology is effective for protecting high power amplifiers in a wireless mode of continuous power transmission.

In a GSM multi-carrier scenario, the output power in each time slot may be different, and the peak-to-average ratio is large, so that the average power in preceding time slots cannot be used to determine the output power in a next time slot. Therefore, the ALC technology for protecting high power amplifiers cannot protect the GSM multi-carrier high power amplifier in time and effectively.

Moreover, in the ALC technology, the peak clipping performed on the downlink IQ signals is not synchronous with time slots. If the peak clipping is performed on the signals input into the DAC module in the middle of a time slot, the signal amplitude in a single time slot fluctuates, which easily leads to in an error code in the downlink data, thereby affecting the network performance.

Moreover, as the ALC technology performs the peak clipping on the combined IQ signals, the carrier power in the whole downlink channel is decreased. As such, the coverage radius of the whole cell may be reduced, resulting in frequent handover of a user terminal at the cell edge, thereby reducing the call quality of the user terminal.

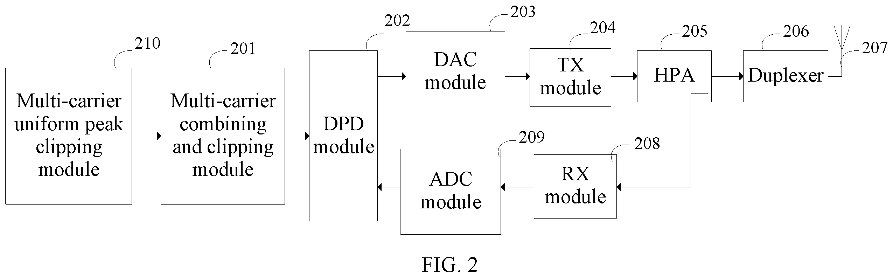

FIG. 2 is a schematic view of multi-carrier downlink applying a GSM multi-carrier uniform peak clipping technology in the prior art.

In FIG. 2, 201 is a multi-carrier combining and clipping module, 202 is a DPD module, 203 is a DAC module, 204 is a TX module, 205 is an HPA, 206 is a duplexer, 207 is an antenna, 208 is an RX module for feedback, 209 is an ADC module for feedback, and 210 is a multi-carrier uniform peak clipping module.

Taking a rated total output power of a multi-carrier channel as a reference, the GSM multi-carrier uniform peak clipping technology performs a uniform peak clipping process on a power difference exceeding the rated total output power of all logic carriers in the multi-carrier channel.

When the GSM multi-carrier uniform peak clipping technology performs the uniform peak clipping process on all logic carriers in the physical channel, the power of each carrier in the whole downlink channel, including the power of the main BCCH carrier, decreases, and therefore the coverage radius of the whole cell becomes small.

Moreover, the terminal measures the power of the main BCCH carrier in an adjacent cell and reports the power to a base station controller. The base station controller sorts the signal strength of the main BCCH carrier in each cell measured and reported by the terminal, and uses the sorted signal strength as the basis of instructing handover of the terminal. If the power of the main BCCH carrier of a cell decreases, the signal strength of the main BCCH carrier of the cell measured and reported by the terminal may decrease, resulting in frequent handover of the terminal at the cell edge. The increased number of times of handover leads to an increased call drop rate in the cell, resulting in reduced network quality.

In the following embodiments, taking a rated total output power of a multi-carrier channel as a reference, peak clipping is performed on the power difference exceeding the rated total output power on all logic carriers in the multi-carrier channel, so that the total output power of the multi-carrier channel does not exceed the rated total output power of the multi-carrier channel.

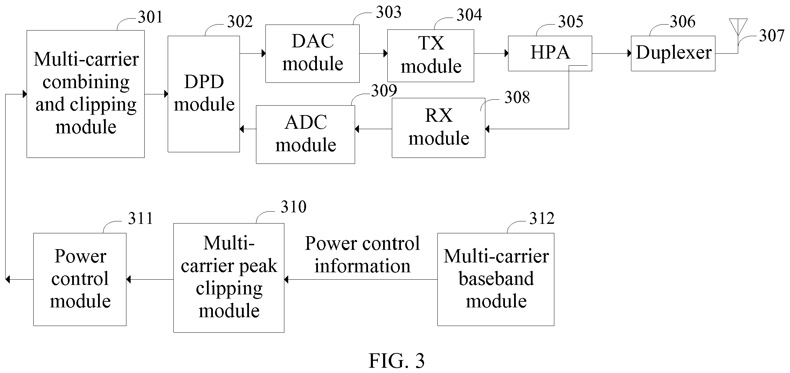

FIG. 3 is a schematic view of multi-carrier downlink applying a multi-carrier control method according to an embodiment of the present invention.

In FIG. 3, 301 is a multi-carrier combining and clipping module, 302 is a DPD module, 303 is a DAC module, 304 is a TX module, 305 is an HPA, 306 is a duplexer, 307 is an antenna, 308 is an RX module for feedback, 309 is an ADC module for feedback, 310 is a multi-carrier peak clipping module, 311 is a power control module, and 312 is a multi-carrier baseband module.

In the downlink direction, a physical channel may include the multi-carrier combining and clipping module 301, the DPD module 302, the DAC module 303, the TX module 304, the HPA 305, the duplexer 306, the antenna 307, the RX module 308, and the ADC module 309 in FIG. 3.

Persons skilled in the art should understand that a base station may include one or more physical channels in the downlink direction.

Unless particularly specified, the following embodiments are described by taking a physical channel in the downlink direction as an example, and the case involving multiple physical channels may be deduced by analogy, so the details will not be described herein again. Persons skilled in the art should understand that carriers in a physical channel may include one or more non-main BCCH carriers, and may further include a main BCCH carrier.

The multi-carrier baseband module 312 sends power control information of each carrier to the multi-carrier peak clipping module 310 to perform peak clipping determination and processing. An output of the multi-carrier peak clipping module 310 is sent to the power control module 311 to perform power control on each carrier. The signals obtained after the power control are processed by the multi-carrier combining and clipping module 301 and digital pre-distortion (DPD) module 302, converted to downlink analog signals by the DAC module 303, sent to the HPA 305 through the analog TX module 304 for amplification, and then transmitted from the antenna 307.

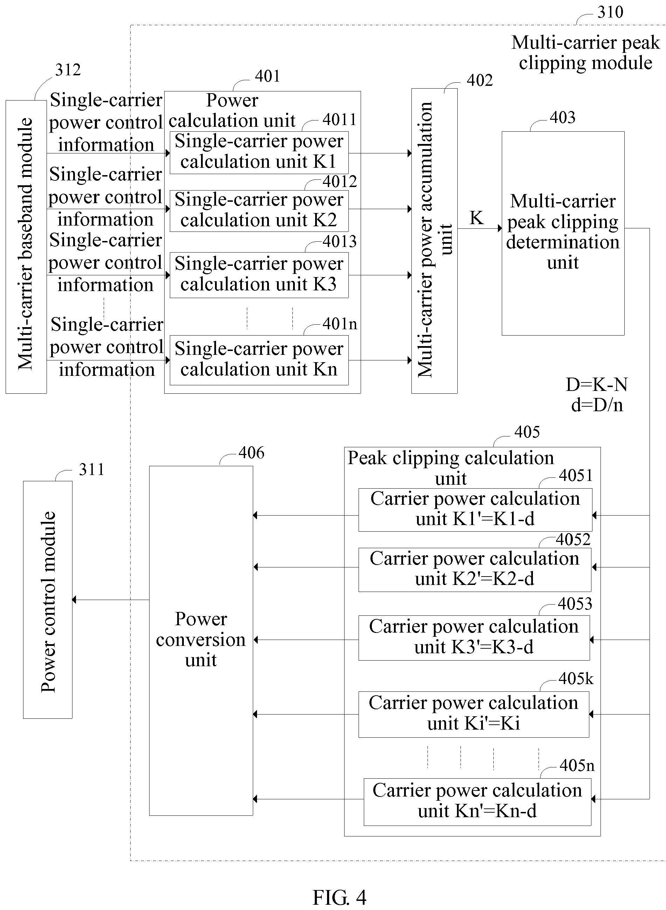

FIG. 4 is a schematic structural view of a multi-carrier peak clipping module according to an embodiment of the present invention.

A multi-carrier control method according to an embodiment of the present invention is further described in the following with reference to FIG. 4.

After a base station adopts the multi-carrier power sharing technology, the coverage radius of a cell can be increased by increasing the carrier power corresponding to a main BCCH channel. To ensure the stable coverage radius of the cell, the multi-carrier control method according to the embodiment of the present invention does not perform a peak clipping process on a carrier of the main BCCH channel.

A multi-carrier baseband module 312 obtains power control information of each carrier in a next time slot in advance and inputs the power control information to a power calculation unit 401 in the multi-carrier peak clipping module 310. The power calculation unit 401 calculates a power of each carrier in the next time slot and then notifies the value of the power to a multi-carrier power accumulation unit 402.

The power calculation unit 401 may further include multiple single-carrier power calculation units 4011, 4012, 4013, ..., and 401n shown in the figure. The dotted line shown in the figure indicates that several single-carrier power calculation units are omitted. Each single-carrier power calculation unit respectively calculates the power (in watts), K1, K2, K3, ..., and Kn, of a carrier in the next time slot according to the input power control information of the carrier.

The multi-carrier power accumulation unit 402 calculates a total output power K (denoted as K in watts) of a multi-carrier channel in the next time slot according to the power of each carrier in the next time slot and notifies the value of total power K to a multi-carrier peak clipping determination unit 403.

The multi-carrier peak clipping determination unit 403 compares the total output power K of the multi-carrier channel in the next time slot with a rated total output power (denoted as N in watts) of the multi-carrier channel, obtains a peak clipping amplitude (denoted as D) and a power (denoted as d) to be decreased for each non-main BCCH carrier in a multi-carrier peak clipping process according a comparison result, and notifies a peak clipping calculation unit 405 of D and d.

Specifically, the multi-carrier peak clipping determination unit 403 subtracts the rated total output power N of the multi-carrier channel from the total power K to obtain the peak clipping amplitude D (in watts) of the multi-carrier channel in the next time slot.

If K is greater than N, D is greater than 0. If K is less than or equal to N, D equals 0 directly. Furthermore, if D equals 0, the power d to be decreased for each non-main BCCH carrier by a multi-carrier peak clipping process also equals 0.

Furthermore, the power d (in watts) to be decreased for each non-main BCCH carrier by a multi-carrier peak clipping process can be calculated according to the number n of the non-main BCCH carriers of the multi-carrier channel. For example, d may be D divided by n, that is, d=D/n.

The peak clipping calculation unit 405 subtracts d respectively from the output power, K1, K2, K3, ..., and Kn, of each non-main BCCH carrier of the multiple carriers in the next time slot, so as to obtain an output power (in watts), K1', K2', K3', ..., and Kn', of each non-main BCCH carrier in the next time slot after peak clipping. The power d does not need to be subtracted from the output power of the main BCCH carrier in the next time slot.

The peak clipping calculation unit 405 may further include multiple carrier power calculation units 4051, 4052, 4053, ..., and 405n shown in the figure, which are adapted to subtract d from the output power Kx of a non-main BCCH carrier in the next time slot to obtain the output power Kx' of the non-main BCCH carrier in the next time slot after peak clipping, in which the value of x is 1, 2,..., or n. A main BCCH carrier power calculation unit does not need to subtract d from the output power of the main BCCH carrier in the next time slot. The dotted line shown in the figure indicates that several non-main BCCH carrier power calculation units are omitted.

K1', K2', K3', ..., and Kn' are input to a power conversion unit 406. The power conversion unit 406 converts the input K1', K2', K3', ..., and Kn' into K1", K2", K3", ..., and Kn" (in decibel milliwatts (dBm)), so as to obtain new power control information (that is, adjusted power control information) of each carrier in the next time slot, and output the new power control information to a power control module 311 for power control for carriers.

Then, the power control module 311 implements the power control for multi-carrier signals, that is, power control in digital domain and analog domain, according to the new power control information of each carrier.

Finally, referring to FIG. 3, the signals obtained after the power control are processed by a multi-carrier combining and clipping module 301 and a DPD module 302, converted to downlink analog signals by a DAC module 303, sent to an HPA 305 through an analog TX module 304 for amplification, and then transmitted from an antenna 307.

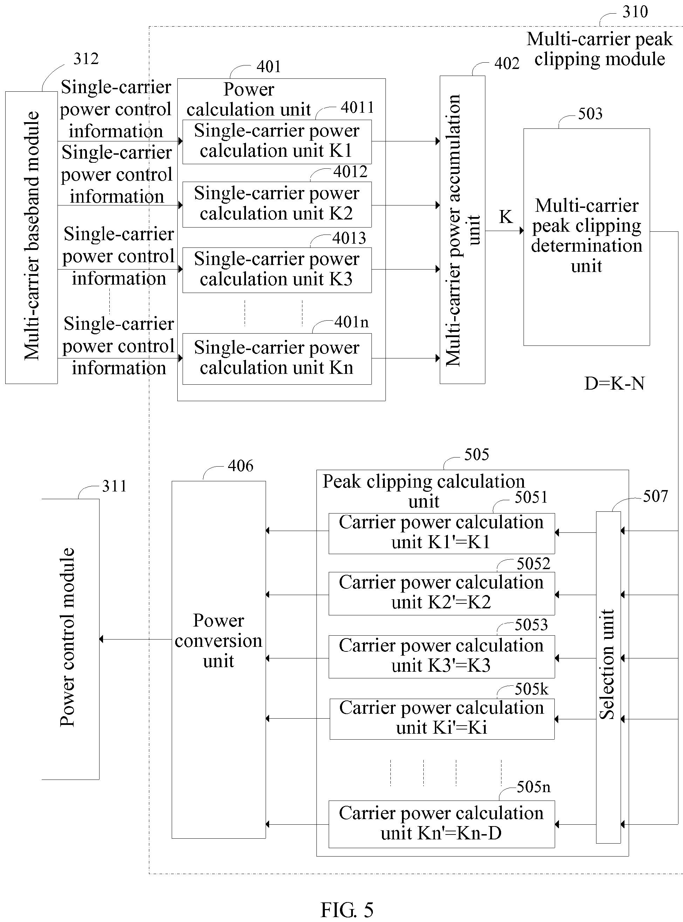

FIG. 5 is a schematic structural view of a multi-carrier peak clipping module according to another embodiment of the present invention.

A multi-carrier control method according to another embodiment of the present invention is further described in the following with reference to FIG. 5.

The multi-carrier control method and the structure of the multi-carrier peak clipping module in this embodiment are similar to those in the above embodiment. The difference between the two embodiments is mainly described in detail in the following.

In this embodiment, a multi-carrier peak clipping determination unit 503 compares the total output power K of the multi-carrier channel in the next time slot with a rated total output power N (in watts) of the multi-carrier channel, obtains a peak clipping amplitude D according to a comparison result, and notifies D to a peak clipping calculation unit 505.

Specifically, the multi-carrier peak clipping determination unit 503 subtracts N from the input K to obtain the peak clipping amplitude D (in watts) of the multi-carrier channel in the next time slot.

If K is greater than N, D is greater than 0. If K is less than or equal to N, D equals 0 directly.

The peak clipping calculation unit 505 may further include a selection unit 507, adapted to select one or more non-main BCCH carriers from multiple non-main BCCH carriers if D is greater than 0. Subsequently, a peak clipping process is performed on the one or more selected non-main BCCH carriers. The selection mode may be a random mode.

For example, four GSM carriers are configured in a multi-carrier channel. If the sum of the output powers of the four GSM carriers is 5 W greater than the rated total output power of the multi-carrier channel, a main BCCH carrier in the four GSM carriers is not peak-clipped, while a carrier is selected (for example, randomly selected) from the other three non-main BCCH carriers, and the carrier is peak-clipped by 5 W, with the other two non-main BCCH carriers being not peak-clipped. Definitely, two carriers may also be randomly selected from the other three non-main BCCH carriers, and each of the two carriers is peak-clipped by 2.5 W, with the remaining carrier being not peak-clipped. Other modes may be adopted as long as the sum of powers to be peak-clipped from the three non-main BCCH carriers is 5 W. Definitely, it should be guaranteed that the actual total output power of the multi-carrier channel does not exceed the rated total output power of the multi-carrier channel.

Returning to FIG. 5, assuming that the selection unit 507 randomly selects a non-main BCCH carrier n, the peak clipping calculation unit 505 subtracts D from the output power Kn of the non-main BCCH carrier n of the multiple carriers in the next time slot, so as to obtain the output power, K1', K2',K3', ..., and Kn', of each non-main BCCH carrier in the next time slot after peak clipping. The output power of the main BCCH carrier in the next time slot does not need to be decreased.

The peak clipping calculation unit 50 may further include multiple non-main BCCH carrier power calculation units 5051, 5052, 5053, ..., and 505n shown in the figure, which are adapted to subtract D from the output power Kx of a non-main BCCH carrier in the next time slot or subtract D/m respectively from the output powers Kx of m non-main BCCH carriers in the next time slot according to a selection result of the selection unit 507, so as to obtain the output power Kx' of the non-main BCCH carrier in the next time slot after peak clipping. The dotted line shown in the figure indicates that several non-main BCCH carrier power calculation units are omitted.

An embodiment of the present invention further provides a base station, which may include the multi-carrier peak clipping module shown in FIG. 4 and/or FIG. 5. For the detailed description, reference may be made to the embodiment of the multi-carrier control method and the embodiment of the multi-carrier peak clipping module above, and the details will not be described herein again.

It can be seen from the above description that, in the embodiments of the present invention, based on the GSM multi-carrier power sharing technology, in one aspect, the output power of the whole multi-carrier high power amplifier is decreased by performing peak clipping on a logic carrier in a multi-carrier channel, so as to effectively prevent an excessively large output power of the multi-carrier high power amplifier, satisfy requirements for the design specification of the multi-carrier high power amplifier, and prevent burnout of the multi-carrier high power amplifier and overloading of power supply systems of main devices, thereby achieving long-term reliable operation of the multi-carrier base station device.

In another aspect, the coverage radius of a cell can be increased by increasing the power of a main BCCH carrier. By performing the peak clipping process on the non-main BCCH carriers in the GSM multi-carrier channel, not on the main BCCH carrier, the total output power of the multi-carrier high power amplifier can be decreased in the case of power over-configuration while a stable coverage of the GSM network is formed, so as to ensure the stability of the performance of the GSM network.

Moreover, by achieving the GSM multi-carrier peak clipping by combining the multi-carrier peak clipping technology with power control in the GSM carrier frequency and time slot level, the GSM multi-carrier high power amplifier can be protected in time and effectively.

In the above embodiments, the technical solutions according to the embodiments of the present invention are only described by taking the GSM as an example. Besides, the technical solutions according to the embodiments of the present invention can also be applied to other communication modes, for example, the Time Division-Synchronous Code Division Multiple Access (TD-SCDMA) technology.

The technical solutions according to the embodiments of the present invention can also be applied to the scenarios for protecting high power amplifiers and power supplies in a multi-carrier wireless mode of power over-configuration. Within the capability of the transmission channel, the transmission power of an important channel or a main carrier is guaranteed preferentially, and the peak clipping process is performed on unimportant carriers in the case of power over-configuration, so as to ensure the steady and reliable operation of network devices and the stability of network performance.

Through the above description of the embodiments, it is clear to persons skilled in the art that the above embodiments describe only partial structures involved in the base station. Some common structures, modules and units, such as a power supply and a processor, are omitted and not described herein again.

Through the above description of the embodiments, it is clear to persons skilled in the art that all or a part of the steps of the method according to the embodiments may be implemented by a program instructing relevant hardware. The computer software product may be stored in a computer readable storage medium and contain several instructions adapted to instruct a computer device (for example, a personal computer, a server, or a network device) to perform the method according to the embodiments of the present invention. The storage medium may be a ROM, a RAM, a magnetic disk, or an optical disk.

Though several specific embodiments of the present invention are disclosed above, the present invention is not limited thereto. Various modifications and variations can be thought of by persons skilled in the art.

## Claims

1. A multi-carrier peak clipping module, comprising:
a power calculation unit (401), adapted to obtain a power of each carrier configured in a multi-carrier channel in a next time slot according to input power control information of said each carrier;
a multi-carrier power accumulation unit (402), adapted to obtain a total output power of the multi-carrier channel in the next time slot according to the power of said each carrier in the next time slot obtained by the power calculation unit;
a multi-carrier peak clipping determination unit (403), adapted to subtract a rated total output power of the multi-carrier channel from the total output power obtained by the multi-carrier power accumulation unit to obtain a peak clipping amplitude of the multi-carrier channel in the next time slot;
a peak clipping calculation unit (405, 505), adapted to decrease powers of only non-main broadcast control channel, BCCH, carriers of the multi-carrier channel according to the peak clipping amplitude obtained by the multi-carrier peak clipping determination unit, and obtain an output power of said each carrier in the next time slot after peak clipping; and
a power conversion unit (406), adapted to obtain adjusted power control information of said each carrier in the next time slot according to the output power of said each carrier in the next time slot after peak clipping obtained by the peak clipping calculation unit,
wherein if the total output power is greater than the rated total output power, the peak clipping amplitude equals a difference between the total output power and the rated total output power; and if the total output power is less than or equal to the rated total output power, the peak clipping amplitude equals zero.

2. The multi-carrier peak clipping module according to claim 1, wherein:
the multi-carrier peak clipping determination unit (403) is further adapted to calculate a power to be decreased for each non-main BCCH carrier according to the peak clipping amplitude and the number of the non-main BCCH carriers of the multi-carrier channel; and
the peak clipping calculation unit (405, 505) is further adapted to subtract the power to be decreased calculated by the multi-carrier peak clipping determination unit respectively from an output power of said each non-main BCCH carrier in the next time slot to obtain the output power of said each non-main BCCH carrier in the next time slot after peak clipping.

3. The multi-carrier peak clipping module according to claim 2, wherein:
the power to be decreased for each non-main BCCH carrier equals a value being the peak clipping amplitude divided by the number of the non-main BCCH carriers.

4. The multi-carrier peak clipping module according to claim 1, further comprising a selection unit (507), adapted to select a non-main BCCH carrier from the multiple non-main BCCH carriers, wherein
the peak clipping calculation unit (505) is adapted to subtract the peak clipping amplitude from an output power of the non-main BCCH carrier selected by the selection unit (507) in the next time slot.

5. The multi-carrier peak clipping module according to claim 1, further comprising a selection unit (507), adapted to select m non-main BCCH carriers from the multiple non-main BCCH carriers, m being less than the number n of the non-main BCCH carriers of the multi-carrier channel and greater than 1, wherein
the peak clipping calculation unit (505) is adapted to subtract a value being the peak clipping amplitude divided by m, from output powers of the m non-main BCCH carriers selected by the selection unit (507) in the next time slot.

6. The multi-carrier peak clipping module according to any one of claims 1 to 5, wherein:
the power calculation unit (401) further comprises multiple single-carrier power calculation units (4011, 4012, ..., 401n), respectively adapted to calculate the power of said each carrier in the next time slot according to the input power control information of said each carier; and
the peak clipping calculation unit (505) further comprises multiple carrier power calculation units (4051, 4052, ..., 405n; 5051, 5052, ..., 505n), respectively adapted to calculate the output power of said each carrier in the next time slot after peak clipping.

7. A base station, **characterized by** comprising a multi-carrier peak clipping module according to any one of claims 1 to 6.

8. The base station according to claim 7, further comprising:
a multi-carrier baseband module (312), adapted to obtain power control information of said each carrier in the next time slot;
a power control module (311), adapted to perform power control according to the adjusted power control information of said each carrier in the next time slot obtained by the multi-carrier peak clipping module.

9. The base station according to claim 8, further comprising:
a physical channel, wherein the physical channel includes a multi-carrier combining and clipping module (301), a digital pre-distortion, DPD, module (302), a digital to analog converter, DAC, module (303), a transmission, TX, module (304), a high power amplifier, HPA (305), a duplexer (306), an antenna (307), a receiving, RX, module (308), and an analog to digital converter, ADC, module (309);
wherein the power control module (311) is coupled to the multi-carrier combining and clipping module (301).

10. A multi-carrier control method, comprising:
obtaining a power of each carrier configured in a multi-carrier channel in a next time slot according to input power control information of said each carrier;
obtaining a total output power of the multi-carrier channel in the next time slot according to the power of said each carrier in the next time slot;
subtracting a rated total output power of the multi-carrier channel from the total power to obtain a peak clipping amplitude of the multi-carrier channel in the next time slot;
decreasing powers of only non-main broadcast control channel, BCCH, carriers of the multi-carrier channel according to the peak clipping amplitude, and obtaining an output power of said each carrier in the next time slot after peak clipping; and
obtaining adjusted power control information of said each carrier in the next time slot according to the output power of said each carrier in the next time slot after peak clipping,
wherein if the total output power is greater than the rated total output power, the peak clipping amplitude equals a difference between the total output power and the rated total output power; and if the total output power is less than or equal to the rated total output power, the peak clipping amplitude equals zero.

11. The multi-carrier control method according to claim 10, wherein the decreasing the powers of the non-main BCCH carriers of the multi-carrier channel according to the peak clipping amplitude , and obtaining the output power of each carrier in the next time slot after peak clipping comprises:
calculating a power to be decreased for each non-main BCCH carrier according to the peak clipping amplitude and the number of the non-main BCCH carriers of the multi-carrier channel; and
subtracting the power to be decreased respectively from an output power of each non-main BCCH carrier in the next time slot, and obtaining the output power of said each non-main BCCH carrier in the next time slot after peak clipping.

12. The multi-carrier control method according to claim 10, further comprising:
selecting a non-main BCCH carrier from multiple non-main BCCH carriers, wherein
the decreasing the powers of the non-main BCCH carriers of the multi-carrier channel according to the peak clipping amplitude to obtain the output power of each carrier in the next time slot after peak clipping comprises:
subtracting the peak clipping amplitude from an output power of the selected non-main BCCH carrier in the next time slot.

13. The multi-carrier control method according to claim 10, further comprising:
selecting m non-main BCCH carriers from the multiple non-main BCCH carriers, m being less than the number n of the non-main BCCH carriers of the multi-carrier channel and greater than 1, wherein
the decreasing the powers of the non-main BCCH carriers of the multi-carrier channel according to the peak clipping amplitude to obtain the output power of each carrier in the next time slot after peak clipping comprises:
subtracting a value being the peak clipping amplitude divided by m, from output powers of the selected m non-main BCCH carriers in the next time slot.

14. The multi-carrier control method according to claim 10, further comprising:
performing power control according to the adjusted power control information of said each carrier in the next time slot.

## Patentansprüche

1. Mehrträger-Spitzenabschneidemodul, umfassend:
eine Leistungsberechnungseinheit (401), die dafür ausgelegt ist, eine Leistung eines jeden Trägers zu erhalten, der in einem Mehrträgerkanal in einem nächsten Zeitschlitz gemäß Eingangsleistungssteuerungsinformationen jedes Trägers konfiguriert ist;
eine Mehrträger-Leistungsakkumulationseinheit (402), die dafür ausgelegt ist, eine Gesamtausgangsleistung des Mehrträgerkanals im nächsten Zeitschlitz gemäß der Leistung jedes Trägers im nächsten Zeitschlitz, die von der Leistungsberechnungseinheit erhalten wird, zu erhalten;
eine Mehrträger-Spitzenabschneidebestimmungseinheit (403), die dafür ausgelegt ist, eine Gesamtnennausgangsleistung des Mehrträgerkanals von der Gesamtausgangsleistung zu subtrahieren, die von der Mehrträger-Leistungsakkumulationseinheit erhalten wird, um eine Spitzenabschneideamplitude des Mehrträgerkanals im nächsten Zeitschlitz zu erhalten;
eine Spitzenabschneideberechnungseinheit (405, 505), die dafür ausgelegt ist, Leistungen nur solcher Träger des Mehrträgerkanals, die nicht der Haupt-BCCH (Broadcast Control Channel, Rundsende-Steuerkanal) sind, gemäß der Spitzenabschneideamplitude, die von der Mehrträger-Spitzenabschneidebestimmungseinheit erhalten wird, zu senken und eine Ausgangsleistung jedes Trägers im nächsten Zeitschlitz nach dem Spitzenabschneiden zu erhalten; und
eine Leistungswandlungseinheit (406), die dafür ausgelegt ist, angepasste Leistungssteuerungsinformationen jedes Trägers im nächsten Zeitschlitz gemäß der von der Spitzenabschneideberechnungseinheit erhaltenen Ausgangsleistung jedes Trägers im nächsten Zeitschlitz nach dem Spitzenabschneiden zu erhalten,
wobei, falls die Gesamtausgangsleistung größer als die Gesamtnennausgangsleistung ist, die Spitzenabschneideamplitude gleich einer Differenz zwischen der Gesamtausgangsleistung und der Gesamtnennausgangsleistung ist; und falls die Gesamtausgangsleistung kleiner oder gleich der Gesamtnennausgangsleistung ist, die Spitzenabschneideamplitude gleich null ist.

2. Mehrträger-Spitzenabschneidemodul gemäß Anspruch 1, wobei:
die Mehrträger-Spitzenabschneidebestimmungseinheit (403) ferner dafür ausgelegt ist, eine zu senkende Leistung für jeden Träger, der nicht der Haupt-BCCH ist, gemäß der Spitzenabschneideamplitude und der Anzahl der Träger des Mehrträgerkanals, die nicht der Haupt-BCCH sind, zu berechnen; und
die Spitzenabschneideberechnungseinheit (405, 505) ferner dafür ausgelegt ist, die zu senkende Leistung, die von der Mehrträger-Spitzenabschneidebestimmungseinheit berechnet wird, jeweils von einer Ausgangsleistung jedes Trägers, der nicht der Haupt-BCCH ist, im nächsten Zeitschlitz zu subtrahieren, um die Ausgangsleistung jedes Trägers, der nicht der Haupt-BCCH ist, im nächsten Zeitschlitz nach dem Spitzenabschneiden zu erhalten.

3. Mehrträger-Spitzenabschneidemodul gemäß Anspruch 2, wobei:
die zu senkende Leistung für jeden Träger, der nicht der Haupt-BCCH ist, gleich einem Wert ist, der die Spitzenabschneideamplitude dividiert durch die Anzahl der Träger ist, die nicht der Haupt-BCCH sind.

4. Mehrträger-Spitzenabschneidemodul gemäß Anspruch 1, das ferner eine Auswahleinheit (507) umfasst, die dafür ausgelegt ist, einen Träger, der nicht der Haupt-BCCH ist, aus den mehreren Trägern auszuwählen, die nicht der Haupt-BCCH sind, wobei
die Spitzenabschneideberechnungseinheit (505) dafür ausgelegt ist, die Spitzenabschneideamplitude von einer Ausgangsleistung des Trägers, der nicht der Haupt-BCCH ist, zu subtrahieren, der von der Auswahleinheit (507) im nächsten Zeitschlitz ausgewählt wird.

5. Mehrträger-Spitzenabschneidemodul gemäß Anspruch 1, das ferner eine Auswahleinheit (507) umfasst, die dafür ausgelegt ist, m Träger, die nicht der Haupt-BCCH sind, aus den mehreren Trägern auszuwählen, die nicht der Haupt-BCCH sind, wobei m kleiner als die Anzahl n der Träger des Mehrträgerkanals, die nicht der Haupt-BCCH sind, und größer als 1 ist, wobei
die Spitzenabschneideberechnungseinheit (505) dafür ausgelegt ist, einen Wert, der die Spitzenabschneideamplitude dividiert durch m ist, von Ausgangsleistungen der m Träger, die nicht der Haupt-BCCH sind, zu subtrahieren, die von der Auswahleinheit (507) im nächsten Zeitschlitz ausgewählt werden.

6. Mehrträger-Spitzenabschneidemodul gemäß einem der Ansprüche 1 bis 5, wobei:
die Leistungsberechnungseinheit (401) ferner mehrere Einträger-Leistungsberechnungseinheiten (4011, 4012, ..., 401n) umfasst, die jeweils dafür ausgelegt sind, die Leistung jedes Trägers im nächsten Zeitschlitz gemäß den Eingangsleistungssteuerungsinformationen jedes Trägers zu berechnen; und
die Spitzenabschneideberechnungseinheit (505) ferner mehrere Trägerleistungsberechnungseinheiten (4051, 4052, ..., 405n; 5051, 5052, ..., 505n) umfasst, die jeweils dafür ausgelegt sind, die Ausgangsleistung jedes Trägers im nächsten Zeitschlitz nach dem Spitzenabschneiden zu berechnen.

7. Basisstation, **dadurch gekennzeichnet, dass** sie ein Mehrträger-Spitzenabschneidemodul gemäß einem der Ansprüche 1 bis 6 umfasst.

8. Basisstation nach Anspruch 7, ferner umfassend:
ein Mehrträger-Basisbandmodul (312), das dafür ausgelegt ist, Leistungssteuerungsinformationen jedes Trägers im nächsten Zeitschlitz zu erhalten;
ein Leistungssteuerungsmodul (311), das dafür ausgelegt ist, eine Leistungssteuerung gemäß der vom Mehrträger-Spitzenabschneidemodul erhaltenen angepassten Leistungssteuerungsinformationen jedes Trägers im nächsten Zeitschlitz durchzuführen.

9. Basisstation nach Anspruch 8, ferner umfassend:
einen physikalischen Kanal, wobei der physikalische Kanal ein Mehrträgerkombinier- und -abschneidemodul (301), ein DPD-Modul (Digital Pre-Distortion, digitale Vorverzerrung) (302), ein DAC-Modul (Digital to Analog Converter, Digital-Analog-Wandler) (303), ein Übertragungs-(TX-)Modul (304), einen Hochleistungsverstärker (High Power Amplifier, HPA) (305), einen Duplexer (306), eine Antenne (307), ein Empfangs-(RX-)Modul (308) und ein ADC-Modul (Analog to Digital Converter, Analog-Digital-Wandler) (309) umfasst;
wobei das Leistungssteuerungsmodul (311) mit dem Mehrträgerkombinier- und - abschneidemodul (301) gekoppelt ist.

10. Mehrträgersteuerungsverfahren, umfassend:
Erhalten einer Leistung eines jeden Trägers, der in einem Mehrträgerkanal in einem nächsten Zeitschlitz konfiguriert ist, gemäß Eingangsleistungssteuerungsinformationen jedes Trägers;
Erhalten einer Gesamtausgangsleistung des Mehrträgerkanals im nächsten Zeitschlitz gemäß der Leistung jedes Trägers im nächsten Zeitschlitz;
Subtrahieren einer Gesamtnennausgangsleistung des Mehrträgerkanals von der Gesamtleistung, um eine Spitzenabschneideamplitude des Mehrträgerkanals im nächsten Zeitschlitz zu erhalten;
Senken von Leistungen nur solcher Träger des Mehrträgerkanals, die nicht der Haupt-BCCH (Broadcast Control Channel, Rundsende-Steuerkanal) sind, gemäß der Spitzenabschneideamplitude und Erhalten einer Ausgangsleistung jedes Trägers im nächsten Zeitschlitz nach dem Spitzenabschneiden; und
Erhalten von angepassten Leistungssteuerungsinformationen jedes Trägers im nächsten Zeitschlitz gemäß der Ausgangsleistung jedes Trägers im nächsten Zeitschlitz nach dem Spitzenabschneiden,
wobei, falls die Gesamtausgangsleistung größer als die Gesamtnennausgangsleistung ist, die Spitzenabschneideamplitude gleich einer Differenz zwischen der Gesamtausgangsleistung und der Gesamtnennausgangsleistung ist; und falls die Gesamtausgangsleistung kleiner oder gleich der Gesamtnennausgangsleistung ist, die Spitzenabschneideamplitude gleich null ist.

11. Mehrträgersteuerungsverfahren gemäß Anspruch 10, wobei das Senken der Leistungen der Träger des Mehrträgerkanals, die nicht der Haupt-BCCH sind, gemäß der Spitzenabschneideamplitude und
das Erhalten der Ausgangsleistung jedes Trägers im nächsten Zeitschlitz nach dem Spitzenabschneiden umfassen:
Berechnen einer zu senkenden Leistung für jeden Träger, der nicht der Haupt-BCCH ist, gemäß der Spitzenabschneideamplitude und der Anzahl der Träger des Mehrträgerkanals, die nicht der Haupt-BCCH sind; und
Subtrahieren der zu senkenden Leistung jeweils von einer Ausgangsleistung jedes Trägers, der nicht der Haupt-BCCH ist, im nächsten Zeitschlitz und Erhalten der Ausgangsleistung jedes Trägers, der nicht der Haupt-BCCH ist, im nächsten Zeitschlitz nach dem Spitzenabschneiden.

12. Mehrträgersteuerungsverfahren gemäß Anspruch 10, ferner umfassend:
Auswählen eines Trägers, der nicht der Haupt-BCCH ist, aus mehreren Trägern, die nicht der Haupt-BCCH sind, wobei
das Senken der Leistungen der Träger des Mehrträgerkanals, die nicht der Haupt-BCCH sind, gemäß der Spitzenabschneideamplitude, um die Ausgangsleistung jedes Trägers im nächsten Zeitschlitz nach dem Spitzenabschneiden zu erhalten, umfasst:
Subtrahieren der Spitzenabschneideamplitude von einer Ausgangsleistung des ausgewählten Trägers, der nicht der Haupt-BCCH ist, im nächsten Zeitschlitz.

13. Mehrträgersteuerungsverfahren gemäß Anspruch 10, ferner umfassend:
Auswählen von m Trägern, die nicht der Haupt-BCCH sind, aus den mehreren Trägern, die nicht der Haupt-BCCH sind, wobei m kleiner als die Anzahl n der Träger des Mehrträgerkanals, die nicht der Haupt-BCCH sind, und größer als 1 ist, wobei
das Senken der Leistungen der Träger des Mehrträgerkanals, die nicht der Haupt-BCCH sind, gemäß der Spitzenabschneideamplitude, um die Ausgangsleistung jedes Trägers im nächsten Zeitschlitz nach dem Spitzenabschneiden zu erhalten, umfasst:
Subtrahieren eines Werts, der die Spitzenabschneideamplitude dividiert durch m ist, von Ausgangsleistungen der ausgewählten m Träger, die nicht der Haupt-BCCH sind, im nächsten Zeitschlitz.

14. Mehrträgersteuerungsverfahren gemäß Anspruch 10, ferner umfassend:
Durchführen einer Leistungssteuerung gemäß der angepassten Leistungssteuerungsinformationen jedes Trägers im nächsten Zeitschlitz.

## Revendications

1. Module d'écrêtage multiporteuse, comprenant :
une unité de calcul de puissance (401), apte à obtenir une puissance de chaque porteuse configurée dans un canal multiporteuse dans un créneau temporel suivant conformément à des informations de commande de puissance d'entrée de chacune desdites porteuses ;
une unité d'accumulation de puissance multiporteuse (402), apte à obtenir une puissance de sortie totale du canal multiporteuse dans le créneau temporel suivant conformément à la puissance de chacune desdites porteuses dans le créneau temporel suivant obtenue par l'unité de calcul de puissance ;
une unité de détermination d'écrêtage multiporteuse (403), apte à soustraire une puissance de sortie totale nominale du canal multiporteuse à la puissance de sortie totale obtenue par l'unité d'accumulation de puissance multiporteuse afin d'obtenir une amplitude d'écrêtage du canal multiporteuse dans le créneau temporel suivant ;
une unité de calcul d'écrêtage (405, 505), apte à réduire les puissances uniquement des porteuses de canal de commande de diffusion, BCCH, non principales du canal multiporteuse conformément à l'amplitude d'écrêtage obtenue par l'unité de détermination d'écrêtage multiporteuse, et à obtenir une puissance de sortie de chacune desdites porteuses dans le créneau temporel suivant après l'écrêtage ; et
une unité de conversion de puissance (406), apte à obtenir des informations de commande de puissance ajustées de chacune desdites porteuses dans le créneau temporel suivant conformément à la puissance de sortie de chacune desdites porteuses dans le créneau temporel suivant après l'écrêtage obtenu par l'unité de calcul d'écrêtage,
dans lequel, si la puissance de sortie totale est supérieure à la puissance de sortie totale nominale, l'amplitude d'écrêtage est égale à une différence entre la puissance de sortie totale et la puissance de sortie totale nominale ; et si la puissance de sortie totale est inférieure ou égale à la puissance de sortie totale nominale, l'amplitude d'écrêtage est égale à zéro.

2. Module d'écrêtage multiporteuse selon la revendication 1, dans lequel :
l'unité de détermination d'écrêtage multiporteuse (403) est en outre apte à calculer une puissance devant être réduite pour chaque porteuse BCCH non principale conformément à l'amplitude d'écrêtage et au nombre des porteuses BCCH non principales du canal multiporteuse ; et
l'unité de calcul d'écrêtage (405, 505) est en outre apte à soustraire la puissance devant être réduite calculée par l'unité de détermination d'écrêtage multiporteuse respectivement à une puissance de sortie de chacune desdites porteuses BCCH non principales dans le créneau temporel suivant afin d'obtenir la puissance de sortie de chacune desdites porteuses BCCH non principales dans le créneau temporel suivant après l'écrêtage.

3. Module d'écrêtage multiporteuse selon la revendication 2, dans lequel :
la puissance devant être réduite pour chaque porteuse BCCH non principale est égale à une valeur étant l'amplitude d'écrêtage divisée par le nombre des porteuses BCCH non principales.

4. Module d'écrêtage multiporteuse selon la revendication 1, comprenant en outre une unité de sélection (507), apte à sélectionner une porteuse BCCH non principale parmi les multiples porteuses BCCH non principales, dans lequel
l'unité de calcul d'écrêtage (505) est apte à soustraire l'amplitude d'écrêtage à une puissance de sortie de la porteuse BCCH non principale sélectionnée par l'unité de sélection (507) dans le créneau temporel suivant.

5. Module d'écrêtage multiporteuse selon la revendication 1, comprenant en outre une unité de sélection (507), apte à sélectionner m porteuses BCCH non principales parmi les multiples porteuses BCCH non principales, m étant inférieur au nombre n des porteuses BCCH non principales du canal multiporteuse et supérieur à 1, dans lequel l'unité de calcul d'écrêtage (505) est apte à soustraire une valeur étant l'amplitude d'écrêtage divisée par m, aux puissances de sortie des m porteuses BCCH non principales sélectionnées par l'unité de sélection (507) dans le créneau temporel suivant.

6. Module d'écrêtage multiporteuse selon l'une quelconque des revendications 1 à 5, dans lequel :
l'unité de calcul de puissance (401) comprend en outre de multiples unités de calcul de puissance à une seule porteuse (4011, 4012, ..., 401n), respectivement aptes à calculer la puissance de chacune desdites porteuses dans le créneau temporel suivant conformément aux informations de commande de puissance d'entrée de chacune desdites porteuses ; et
l'unité de calcul d'écrêtage (505) comprend en outre de multiples unités de calcul de puissance de porteuses (4051, 4052, ..., 405n ; 5051, 5052, ..., 505n), respectivement aptes à calculer la puissance de sortie de chacune desdites porteuses dans le créneau temporel suivant après l'écrêtage.

7. Station de base, **caractérisée en ce qu'**elle comprend un module d'écrêtage multiporteuse selon l'une quelconque des revendications 1 à 6.

8. Station de base selon la revendication 7, comprenant en outre :
un module de bande de base multiporteuse (312), apte à obtenir des informations de commande de puissance de chacune desdites porteuses dans le créneau temporel suivant ;
un module de commande de puissance (311), apte à effectuer une commande de puissance conformément aux informations de commande de puissance ajustées de chacune desdites porteuses dans le créneau temporel suivant obtenues par le module d'écrêtage multiporteuse.

9. Station de base selon la revendication 8, comprenant en outre :
un canal physique, dans lequel le canal physique comprend un module de combinaison et d'écrêtage multiporteuse (301), un module de prédistorsion numérique, DPD (302), un module convertisseur numérique à analogique, DAC (303), un module d'émission, TX (304), un amplificateur haute puissance, HPA (305), un duplexeur (306), une antenne (307), un module de réception, RX (308), et un module convertisseur analogique à numérique, ADC (309) ;
dans lequel le module de commande de puissance (311) est couplé au module de combinaison et d'écrêtage multiporteuse (301).

10. Procédé de commande multiporteuse, comprenant :
l'obtention d'une puissance de chaque porteuse configurée dans un canal multiporteuse dans un créneau temporel suivant conformément à des informations de commande de puissance d'entrée de chacune desdites porteuses ;
l'obtention d'une puissance de sortie totale du canal multiporteuse dans le créneau temporel suivant conformément à la puissance de chacune desdites porteuses dans le créneau temporel suivant ;
la soustraction d'une puissance de sortie totale nominale du canal multiporteuse à la puissance totale afin d'obtenir une amplitude d'écrêtage du canal multiporteuse dans le créneau temporel suivant ;
la réduction des puissances uniquement des porteuses de canal de commande de diffusion, BCCH, non principales du canal multiporteuse conformément à l'amplitude d'écrêtage, et l'obtention d'une puissance de sortie de chacune desdites porteuses dans le créneau temporel suivant après l'écrêtage ; et
l'obtention d'informations de commande de puissance ajustées de chacune desdites porteuses dans le créneau temporel suivant conformément à la puissance de sortie de chacune desdites porteuses dans le créneau temporel suivant après l'écrêtage,
dans lequel, si la puissance de sortie totale est supérieure à la puissance de sortie totale nominale, l'amplitude d'écrêtage est égale à une différence entre la puissance de sortie totale et la puissance de sortie totale nominale ; et si la puissance de sortie totale est inférieure ou égale à la puissance de sortie totale nominale, l'amplitude d'écrêtage est égale à zéro.

11. Procédé de commande multiporteuse selon la revendication 10, dans lequel la réduction des puissances des porteuses BCCH non principales du canal multiporteuse conformément à l'amplitude d'écrêtage, et l'obtention de la puissance de sortie de chaque porteuse dans le créneau temporel suivant après l'écrêtage comprennent :
le calcul d'une puissance devant être réduite pour chaque porteuse BCCH non principale conformément à l'amplitude d'écrêtage et au nombre des porteuses BCCH non principales du canal multiporteuse ; et
la soustraction de la puissance devant être réduite respectivement à une puissance de sortie de chaque porteuse BCCH non principale dans le créneau temporel suivant, et l'obtention de la puissance de sortie de chacune desdites porteuses BCCH non principales dans le créneau temporel suivant après l'écrêtage.

12. Procédé de commande multiporteuse selon la revendication 10, comprenant en outre :
la sélection d'une porteuse BCCH non principale parmi de multiples porteuses BCCH non principales, dans lequel
la réduction des puissances des porteuses BCCH non principales du canal multiporteuse conformément à l'amplitude d'écrêtage afin d'obtenir la puissance de sortie de chaque porteuse dans le créneau temporel suivant après l'écrêtage comprend :
la soustraction de l'amplitude d'écrêtage à une puissance de sortie de la porteuse BCCH non principale sélectionnée dans le créneau temporel suivant.

13. Procédé de commande multiporteuse selon la revendication 10, comprenant en outre :
la sélection de m porteuses BCCH non principales parmi les multiples porteuses BCCH non principales, m étant inférieur au nombre n des porteuses BCCH non principales du canal multiporteuse et supérieur à 1, dans lequel
la réduction des puissances des porteuses BCCH non principales du canal multiporteuse conformément à l'amplitude d'écrêtage afin d'obtenir la puissance de sortie de chaque porteuse dans le créneau temporel suivant après l'écrêtage comprend :
la soustraction d'une valeur étant l'amplitude d'écrêtage divisée par m, aux puissances de sortie des m porteuses BCCH non principales sélectionnées dans le créneau temporel suivant.

14. Procédé de commande multiporteuse selon la revendication 10, comprenant en outre :
l'exécution d'une commande de puissance conformément aux informations de commande de puissance ajustées de chacune desdites porteuses dans le créneau temporel suivant.
